# EUROPEAN PATENT APPLICATION

(11) **EP 3 235 941 A1**
(43) Date of publication of application: **25.10.2017**
(21) Application number: 15869390.3
(22) Date of filing: 14.12.2015
(51) Int. Cl.: D06F 57/12

(54) **CLOTHES HORSE FOR SURF WEAR, FITTABLE TO THE OUTSIDE OF A VEHICLE**

(30) Priority: 15.12.2014 ES 201431625 U
(71) Applicant: Molina Sanchez, Alvaro, 28231 Madrid (ES)
(72) Inventor: Molina Sanchez, Alvaro, 28231 Madrid (ES)
(74) Representative: Lahidalga de Careaga, Jose Luis
(86) International application number: PCT/ES2015/070897
(87) International publication number: WO 2016/097440

(57) **Abstract**

Clothes drying rack for surfing apparel adaptable to the exterior of vehicles, the invention is comprised by means to hang apparel associated with means for fastening it to the exterior part of a vehicle. These clothes-hanging means can be comprised by, for example, at least one bar that can have an end hook and/or at least, a crossbar held by supports, in this case end supports.

## Description

### PURPOSE OF THE INVENTION

This invention refers to a clothes drying rack for surfing apparel adaptable to the exterior of vehicles.

### BACKGROUND OF THE INVENTION

At present, after enjoying a day of surfing, when it is time to take off the apparel that protects you from the sun and the cold, frequently there is no place to leave it to dry in good conditions, especially at non-urban beaches.

Furthermore, at urban beaches, benches or walls can be used to hang or extend the apparel, but it means in the first case occupying a space dedicated to people, and in the second case, the garment can be stained with the dirt that might be on the wall.

For this reason, you usually opt to extend the apparel on the ground, directly or on a towel, or hang it from the doors of a vehicle if one is available. Extending the garment directly on the ground means it will get dirty, which is not cleaned easily and it requires shaking the garment which can deteriorate it.

Placing it on a towel means in the first place the need of having a towel, and in second place that there is transfer of moisture from the garment to the towel, and then the latter has to be dried.

Lastly, hanging the apparel on the doors of a vehicle means in the first place, putting it the vehicle's body in contact with sea water, which can cause corrosion problems; in the second place, the direct contact with the car body means that the garment is stained with the dirt that is on the body, and in the third place, it can get the interior parts of the vehicle wet, which are more sensitive to an agent such as salt water.

### DESCRIPTION OF THE INVENTION

The clothes drying rack of this invention for surfing apparel adaptable to the exterior of vehicles has a constitution that solves the explained problems.

In accordance with the invention, the clothes drying rack is comprised by means to hang apparel associated with some means of fastening it to the exterior of a vehicle.

The clothes-hanging means include any that can fulfil this function, for example, a bar with hooks or hangers, a crossbar held by supports, etc.

In addition, the means for hanging will ideally have a length superior to the projection of the vehicle under the fastening area of the clothes drying rack, so that the garment is suspending in the air, without any contact in any case with the body of the vehicle, and is exposed on the front and back to the sun and air, which produces faster drying.

### BRIEF DESCRIPTION OF THE DRAWINGS

Figure 1 shows a view of a realisation of the clothes drying rack of this invention where the means for hanging the apparel includes a bar and a suction cup as the means for fastening it to the vehicle.
Figure 2 shows a view of a realisation of the clothes drying rack of this invention similar to that shown in figure 1, where the means for hanging the apparel includes a bar with telescopic sections.
Figure 3 shows a view of a realisation of the clothes drying rack of this invention where the means for hanging the apparel includes some end supports that have a crossbar. It is observed that the end pieces can be telescopic and that the fastening means includes suction cups.
Figure 4 shows a view of a realisation of the clothes drying rack of this invention similar to that shown in figure 3, where the crossbar is also telescopic.
Figure 5 shows a view of a realisation of the clothes drying rack of this invention where the means for fastening it to the vehicle includes a fastener placed on the edge of the window, and that also includes a telescopic bar with a hook on the end.
Figure 6 shows a view of a realisation of the clothes drying rack of this invention where the means for fastening it to the vehicle includes a fastener placed on the bars of the roof of the vehicle, and includes a crossbar held on non-extensible supports.
Figure 7 shows a view of a realisation of the clothes drying rack of this invention where the means for fastening it to the vehicle includes fasteners placed on the edge of the window and the end crossbar is held level by the lockable articulations of its supports.
Figure 8 shows a view of a realisation of the clothes drying rack of this invention where the means for fastening it to the vehicle includes a fastener placed on the rails of the roof of said vehicle, and includes a crossbar held by non-extensible supports.

### DESCRIPTION OF A PRACTICAL REALISATION OF THE INVENTION

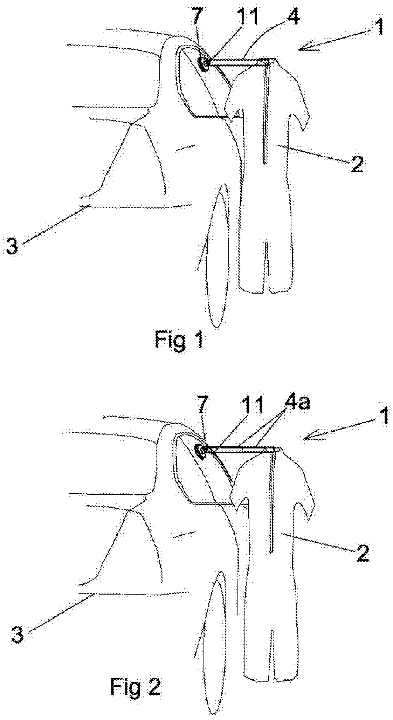

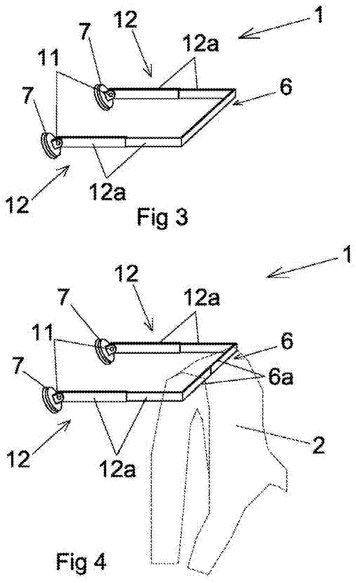

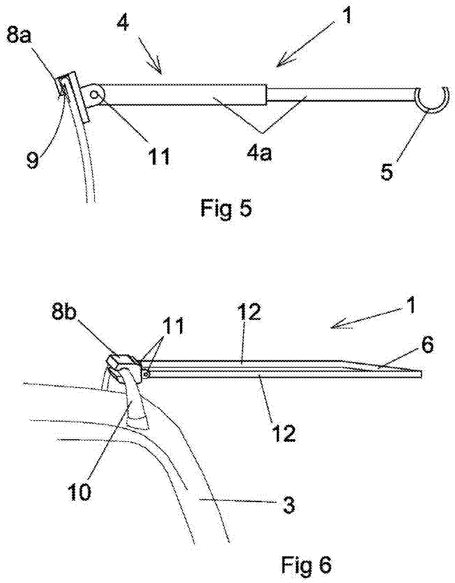

The clothes drying rack (1) of this invention for surfing apparel (2) adaptable to the exterior of the vehicle (3) includes the means to hang apparel (2) associated with some means to fasten it to the exterior of vehicles (3). These means of hanging apparel (2) can include, for example, at least, a bar (4) (see Fig. 1), which has an end hook (5) (see Fig. 5) and/or, at least, a crossbar (6) held by supports (12), in this case, end supports (see Figs. 3, 4, 6 and 8).

The bar (4) and/or the supports (12) have a length superior to the projection of the vehicle (3) under the fastening area of the clothes drying rack (1) to avoid the wet garment (2) coming into contact with the vehicle (3) and to protect the latter from contact with salt water and, therefore, possible corrosion attacks, as well as to avoid the apparel (2) becoming stained from the dirt on the vehicle body (3).

In order to achieve the described goal, the invention is envisaged for the bars (4) and/or supports (12) to be able to include first telescopic (4a, 12a), extensible and/or collapsible sections, not represented. The telescopic (4a, 12a) or extensible sections are extended to achieve the required length, and/or the collapsible sections will be mounted in an adequate number. In addition, this configuration can reduce the space occupied by the clothes drying rack (1) when it is folded/dismantled and not in use. Furthermore, it has been envisaged that the crossbars (6) can include second telescopic (6a), extensible and/or collapsible sections, with the aim of increasing its width and therefore the capacity of hanging the apparel (2) without wrinkles, and/or to folding it into a reduced space.

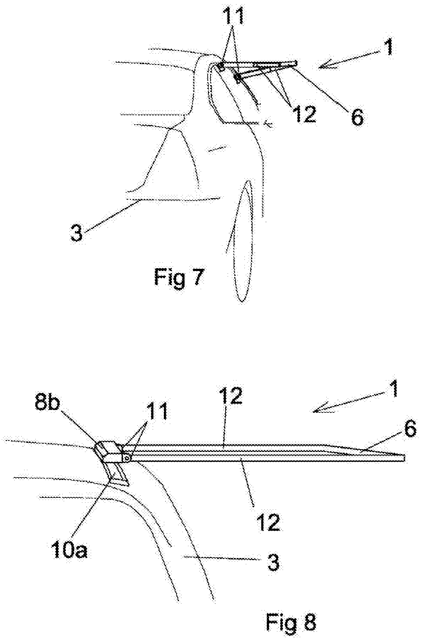

In turn, the means for fastening it to a vehicle (3) can include suction cups (7), first fastening (8a) to edges (9) of the vehicle, such as the edges of the windows (see Fig. 5), door edges, reliefs of the vehicle body, etc. and/or they can also include some second fasteners (8b) to bars (10) or rails (10a) on the vehicle's roof (3) (see Figs. 6 and 8). The suction cups (7) preferably are pressure suction cups, that is, with a mechanism that forces the vacuum in its interior, since they provide better fastening capacity.

In addition, the invention has foreseen the placement of some lockable articulations (11) among the apparel-hanging means and the means of fastening to the vehicle (3), with the aim of being able to adapt to the inclination of the contour of the vehicle (3) in the area where the fastening means are applied, and in order to lock the adapted position. In Figure 7 it can also be observed how they are used to level the crossbar (6) held by its end supports (12) and in this way be able to hang the garment adequately.

Lastly, it has been envisaged for the clothes drying rack (1) to be made in materials resistant to corrosion, such as, for example, plastic and/or aluminium, and/or compound materials, such as carbon fibre. Having sufficiently described the nature of the invention, as well as the way of putting it into practice, it should be noted that the conditions indicated above and represented in the attached drawings are susceptible to modifications of details as long as they do not alter the basic principle.

## Claims

1. Clothes drying rack (1) for surfing apparel (2) adaptable to the exterior of vehicles (3) **characterised in that** it incorporates the means for hanging apparel (2) associated with some means of fastening it to the exterior of a vehicle (3).

2. Clothes drying rack (1) for surfing apparel (2) adaptable to the exterior of vehicles (3) in accordance with claim 1 **characterised in that** the means for hanging apparel (2) are comprised by, at least, one bar (4) and/or, at least, a crossbar (6) held by supports (12).

3. Clothes drying rack (1) for surfing apparel (2) adaptable to the exterior of vehicles (3) in accordance with claim 2 **characterised in that** the bar (4) includes an end hook (5).

4. Clothes drying rack (1) for surfing apparel (2) adaptable to the exterior of vehicles (3) in accordance with claims 2 or 3 **characterised in that** the bar (4) and/or the supports (12) have a length superior to the projection of the vehicle (3) under the fastening area of the clothes drying rack (1).

5. Clothes drying rack (1) for surfing apparel (2) adaptable to the exterior of vehicles (3) in accordance with claims 2 to 4 **characterised in that** the bars (4) and/or the supports (12) are comprised by telescopic (4a, 12a), extensible and/or collapsible sections.

6. Clothes drying rack (1)) for surfing apparel (2) adaptable to the exterior of vehicles (3) in accordance with claims 2 to 5 **characterised in that** the crossbars (6) are comprised by second telescopic (6a), extensible and/or collapsible sections.

7. Clothes drying rack (1) for surfing apparel (2) adaptable to the exterior of vehicles (3) in accordance with any of the previous claims **characterised in that** the means of fastening it to the vehicle (3) is comprised by: suction cups (7), and/or first fasteners (8a) to edges (9) of the vehicle (3), and/or second fasteners (b) to bars (10) or rails (10a) of the vehicle's (3) roof.

8. Clothes drying rack (1) for surfing apparel (2) adaptable to the exterior of vehicles (3) in accordance with claim 7 **characterised in that** the suction cups (7) are comprised by pressure suction cups.

9. Clothes drying rack (1) for surfing apparel (2) adaptable to the exterior of vehicles (3) in accordance with any of the previous claims **characterised in that** it is comprised by lockable articulations (11) between the means of hanging clothes (2) and the means of fastening it to the vehicle (3).
